# EUROPEAN PATENT APPLICATION

(11) **EP 2 375 319 A1**
(43) Date of publication of application: **12.10.2011**
(21) Application number: 11159964.3
(22) Date of filing: 28.03.2011
(51) Int. Cl.: G06F 3/14, H04N 7/24, H04N 21/41, H04N 21/442, H04N 21/4402, H04N 21/4363, H04N 21/436

(54) **Audio/video apparatus and signal control method thereof**

(30) Priority: 01.04.2010 US 319963 P; 26.07.2010 KR 20100071944
(71) Applicant: Samsung Electronics Co., Ltd., Suwon-si, Gyeonggi-do 442-742 (KR)
(72) Inventor: Cho, Bong-hwan, Gyeonggi-do (KR); Ahn, Yoon-soon, Seoul (KR); Yang, Sun-ho, Seoul (KR); Lee, Sang-hoon, Gyeonggi-do (KR); Na, Moon-sung, Gyeonggi-do (KR)
(74) Representative: Robinson, Ian Michael

(57) **Abstract**

An audio/video (AV) apparatus and a signal control method thereof are provided. The AV device includes: an AV interface which is configured to transmit and receive a first signal including AV data according to an High-Definition Multimedia Interface (HDMI) standard and to transmit and receive a second signal including an integrated data packet; a signal converter which selectively converts a received signal received through the AV interface; and a controller which determines whether the received signal is the first signal or the second signal, and controls the signal converter to bypass the received signal or convert the received signal into a converted signal according to the determination.

## Description

### BACKGROUND

### Field

Apparatuses and methods consistent with exemplary embodiments relate to an audio/video (AV) apparatus and a signal control method thereof, and more particularly, to an AV apparatus which includes an AV interface to transmit and receive a first signal including AV data according to High-Definition Multimedia Interface (HDMI) standards or a second signal including an integrated data packet and a signal control method thereof through the AV interface.

### Description of the Related Art

To transmit or receive AV data according to Digital Video/Visual Interactive (DVI) standards or HDMI standards, a related art AV device includes a DVI interface or HDMI interface. Through the DVI interface or the HDMI interface, however, the AV data can be transmitted only from a first device to a second device in one direction.

### SUMMARY

According to the present invention there is provided an apparatus and method as set forth in the appended claims. Other features of the invention will be apparent from the dependent claims, and the description which follows.

One or more exemplary embodiments provide an AV device which includes an AV interface to bidirectionally transmit AV data according to HDMI standards as well as an integrated data packet.

According to an aspect of an exemplary embodiment, there is provided an AV device including: an AV interface which is configured to transmit or receive a first signal comprising AV data according to HDMI standards and to transmit and receive a second signal including an integrated data packet; a signal converter which converts a received signal received through the AV interface; and a controller which determines whether the received signal received through the AV interface is the first signal or the second signal, and controls the signal converter to bypass the signal according to the determination or convert the signal into a converted signal.

The AV device may further include a signal generator which detects whether power is supplied at a predetermined level from an external device if the external device transmitting the first or the second signal through the AV interface is connected, and generates a high signal if the power supply of the predetermined level is detected, and a low signal if the power supply of the predetermined level is not detected.

The controller may determine that the received signal received from the connected external device is the first signal if the high signal is received from the signal generator, and determine that the signal received from the connected external device is the second signal if a low signal is received from the signal generator.

The AV device may further include a signal processor which processes the received signal, and the controller may control the signal processor to process the signal according to the determination or the signal converted by the signal converter.

The AV device may further include a second AV interface, and the controller may bypass the received signal according to the determination or transmit converted the signal through the second AV interface.

The AV device may further include a comparator which determines a change of the generated high or low signal or and a change time, and the signal generator may maintain and transmit the generated high or low signal if it is determined that the generated high or low signal is changed to the low signal and the change occurs within a predetermined time by the comparator.

The first AV interface may be connected to a cable according to the HDMI standard or a cable including a link that transmits and receives the integrated data packet bidirectionally.

The integrated data packet may be transmitted or received by a time division duplex or a space division duplex through the link.

The integrated data packet may include at least one of an uncompressed video data packet, an uncompressed or compressed audio data packet, an Ethernet data packet, a USB data packet, and a control data packet that is transmitted and received to control other devices.

According to an aspect of another exemplary embodiment, there is provided a signal control method of an AV device, the method including: connecting an external device that transmits a first signal including AV data according to an HDMI standard or a second signal including an integrated data packet through an AV interface; determining whether a received signal received from the external device is the first signal or the second signal; and controlling a signal converter to bypass the received signal according to the determination or convert the received signal into another signal.

The method may further include: detecting whether the external device supplies power at a predetermined level; and generating a high signal by a signal generator if the power supply of the predetermined level is detected and generating a low signal by the signal generator if the power supply of the predetermined level is not detected according to the detection.

The determining may include determining that the received signal received from the connected external device is the first signal if the generated signal is the high signal, and determining that the received signal received from the connected external device is the second signal if the generated signal is the low signal.

The method may further include processing by a signal processor the received signal according to the determination or the signal converted by the signal converter.

The method may further include bypassing the received signal according to the determination through a second AV interface or transmitting the converted signal converted by the signal converter through the second AV interface.

The method may further include determining by a comparator whether the generated high signal is changed to the low signal and vice versa and the change time, and the generating the signal may include maintaining and transmitting the generated signal if the generated signal is changed and the change occurs within a predetermined time.

The first AV interface may be connected to a cable according to the HDMI standard or a cable including a link that transmits the integrated data packet bidirectionally.

The integrated data packet may be transmitted and received by a time division duplex or a space division duplex through the link.

The integrated data packet may include at least one of an uncompressed video data packet, an uncompressed or compressed audio data packet, an Ethernet data packet, a USB data packet, and a control data packet that is transmitted and received to control other devices.

According to an aspect of another exemplary embodiment, there is provided a signal control method of an AV device, the method including: determining whether a signal received by an AV interface of the AV device from an eternal device is a first signal including AV data according to an HDMI standard or a second signal including an integrated data packet, wherein the AV interface is configured to transmit or receive the first signal and to transmit and receive the second signal.

According to an aspect of another exemplary embodiment, there is provided an AV interface for transmitting and receiving AV data, the interface including: a plurality of pins configured in accordance with an HDMI standard, wherein the plurality of pins includes a first pin and a second pin to establish a link with an external device, the first pin configured to receive an integrated data packet from the external device and the second pin configured to transmit the integrated data packet to the external device.

### BRIEF DESCRIPTION OF THE DRAWINGS

The above and/or other aspects will become apparent and more readily appreciated from the following description of exemplary embodiments, taken in conjunction with the accompanying drawings, in which:
FIG. 1 illustrates a network in which an AV device is connected to a plurality of external devices according to an exemplary embodiment;
FIG. 2A illustrates an example of a data reception by an AV device according to an exemplary embodiment;
FIG. 2B illustrates an example of a data transmission by an AV device according to an exemplary embodiment;
FIG. 2C illustrates an example of a data bypass by an AV device according to an exemplary embodiment;
FIG. 3 is a control block diagram of an AV device according to an exemplary embodiment;
FIG. 4A illustrates an example of an AV interface of an AV device according to an exemplary embodiment;
FIG. 4B illustrates a link that is established based on an AV interface according to an exemplary embodiment;
FIGS. 5A to 5C illustrate a signal control by an AV device according to one or more exemplary embodiments; and
FIG. 6 is a flowchart of a signal control method of an AV device according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout. Expressions such as "at least one of," when preceding a list of elements, modify the entire list of elements and do not modify the individual elements of the list.

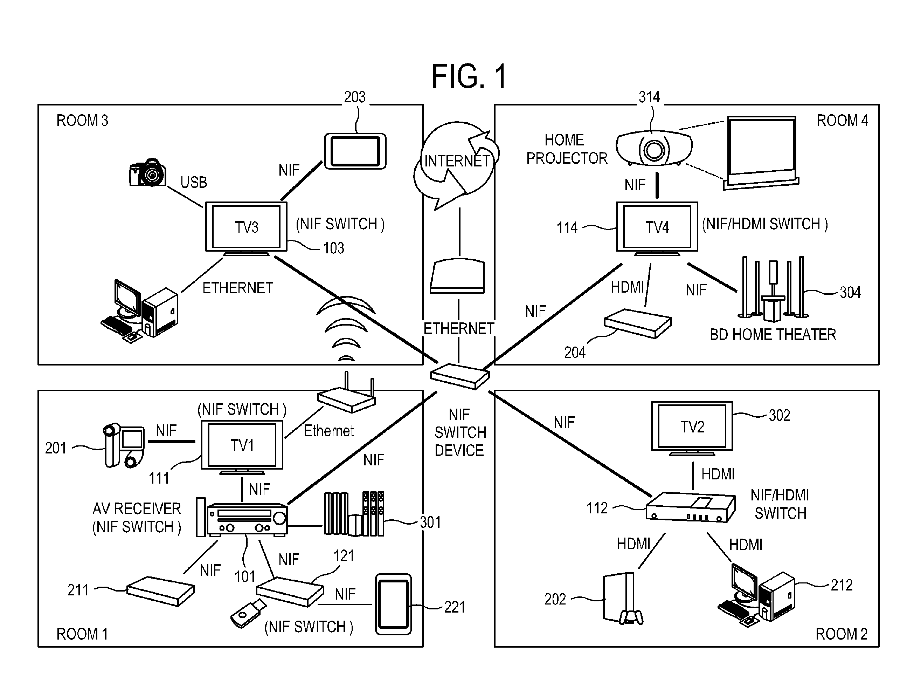

FIG. 1 illustrates a network in which an AV device is connected to a plurality of external devices according to an exemplary embodiment.

The AV device according to the present exemplary embodiment may include any device that processes an audio/video signal. For example, the AV device may include: a computing device such as a personal computer (PC), a digital television (DTV), a camera, a camcorder, a desktop computer, a laptop computer, a smartbook and a netbook; a projector; a game console; a digital versatile disc (DVD)/Blu-ray disc (BD) player; a home theatre; a set-top box; etc.

In FIG. 1, "NIF" indicates a transmission of data through a link that transmits an integrated data packet bidirectionally, "HDMI" indicates a transmission of AV data according to HDMI standards, "USB" indicates a transmission of data according to universal serial bus (USB) standards; and "Ethernet" indicates a transmission of data according to Ethernet standards.

Referring to FIG. 1, the AV device may form a network with a plurality of external devices through an AV interface to transmit and receive a first signal including AV data according to the HDMI standards or a second signal including an integrated data packet.

That is, the AV interface may be connected to both a cable according to an HDMI standard and a cable including a link transmitting and receiving the integrated data packet bidirectionally. Accordingly, the AV device according to the present exemplary embodiment may receive the first signal including the AV data according to the HDMI standard through the AV interface from the external device including the HDMI interface via an HDMI cable. Thus, the AV device may form the network with the external device including only the HDMI interface.

As shown in FIG. 1, the AV device may form a network by being connected to external devices existing in a plurality of rooms through the AV interface. The external devices may include both the AV device according to the present exemplary embodiment and other devices including only the HDMI interface.

In the network, the AV device according to the present exemplary embodiment may be classified as one of a source/leaf device, a source/switch device, a switch device, a sink/switch device, and a sink/leaf device according to its role.

The source/leaf device only provides AV data and may include, for example, a camcorder 201 and a set-top box 211 in a first room 1, a game console 202 and a PC 212 in a second room 2, a mobile phone 203 in a third room 3 and a set-top box 204 in a fourth room 4.

The source/switch device provides AV data and relays the AV data to another device and may include, for example, an AV receiver 101 and a Blu-ray disc (BD) player 121 in the first room 1.

The switch device only receives AV data and relays such data to another device and may include, for example, a switch device 112 in the second room 2 and a home switch device 50 that receives AV data from devices located in all rooms and relays such AV data to the devices located in all rooms.

The sink/switch device receives and plays AV data and relays such AV data to another device, and may include, for example, a DTV 111 in the first room 1, a TV 103 in the third room 3, and a DTV 114 in the fourth room 4.

The sink/leaf device only receives and plays AV data and may include, for example, a DTV 302 in the second room 2.

Accordingly, the AV device according to the present exemplary embodiment may receive a first signal including AV data according to the HDMI standard or a second signal including the integrated data packet through the AV interface. Furthermore, the AV device may reproduce the received signal, or bypass the received signal to an external device. Moreover, the AV device may convert the received signal and reproduce the converted signal, or bypass the converted signal to an external device.

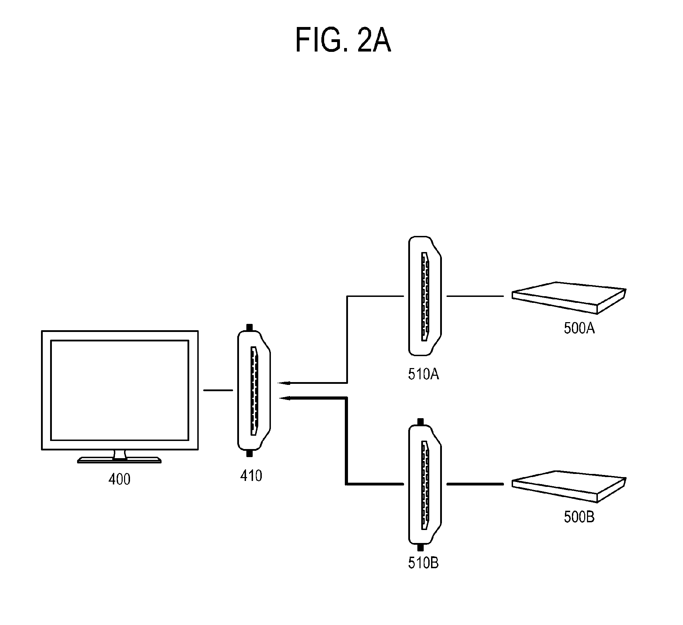

An AV device according to an exemplary embodiment of the present invention will be further described with reference to FIGS. 2A to 2C.

FIG. 2A illustrates an example of a data reception by an AV device according to an exemplary embodiment.

Referring to FIG. 2A, the AV device includes a DTV 400 including an AV interface 410. The DTV 400 acts as a sink/leaf device. The DTV 400 may receive a first signal including AV data according to an HDMI standard from an external source device 500A including an HDMI interface 510A through the AV interface 410. The DTV 400 may process and play the first signal including the AV data according to the HDMI standard through the AV interface 410, or convert the first signal into a second signal including an integrated data packet, and process and play the converted second signal.

Furthermore, the DTV 400 may receive, through the AV interface 410, a second signal including an integrated data packet from an external source device 500B including an AV interface 510B corresponding to the AV interface 410. The DTV 400 may process and play the second signal that is received through the AV interface 410, or convert the second signal into the first signal and process and play the first signal.

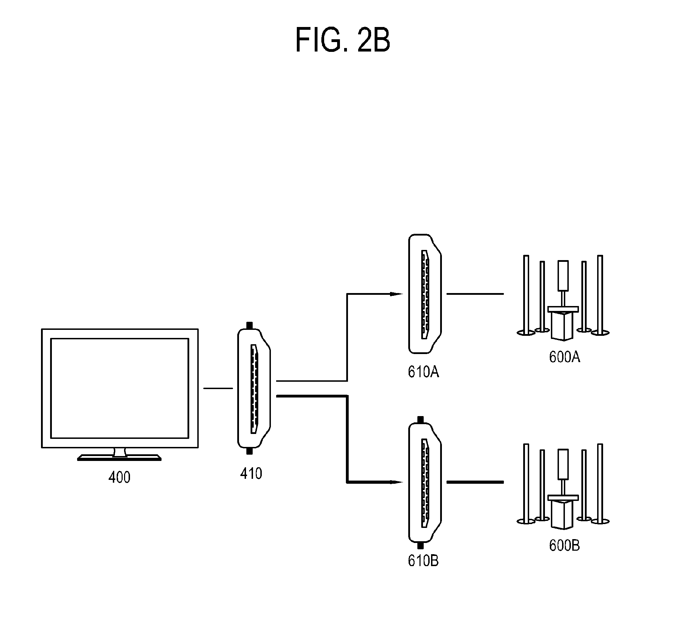

FIG. 2B illustrates an example of a data transmission by an AV device according to an exemplary embodiment.

Referring to FIG. 2B, the AV device includes a DTV 400 including an AV interface 410. The DTV 400 may act as a sink/switch device.

Upon receiving a first signal including AV data according to an HDMI standard from a source, the DTV 400 may bypass the first signal to an external source device 600A including an HDMI interface 610A through the AV interface 410.

If the DTV 400 is connected, through the AV interface 410, to an external source device 600B including an AV interface 610B corresponding to the AV interface 410, the DTV 400 may convert the first signal into a second signal including an integrated data packet and transmit the second signal.

Upon receiving a second signal including the integrated data packet from a source, the DTV 400 may convert the second signal into the first signal and transmit the first signal to the external sink device 600A in case the DTV 400 is connected to the external sink device 600A including an HDMI interface 610A through the AV interface 410.

If the DTV 400 is connected, through the AV interface 410, to an external sink device 600B including the AV interface 610B corresponding to the AV interface 410, the DTV 400 may bypass the second signal.

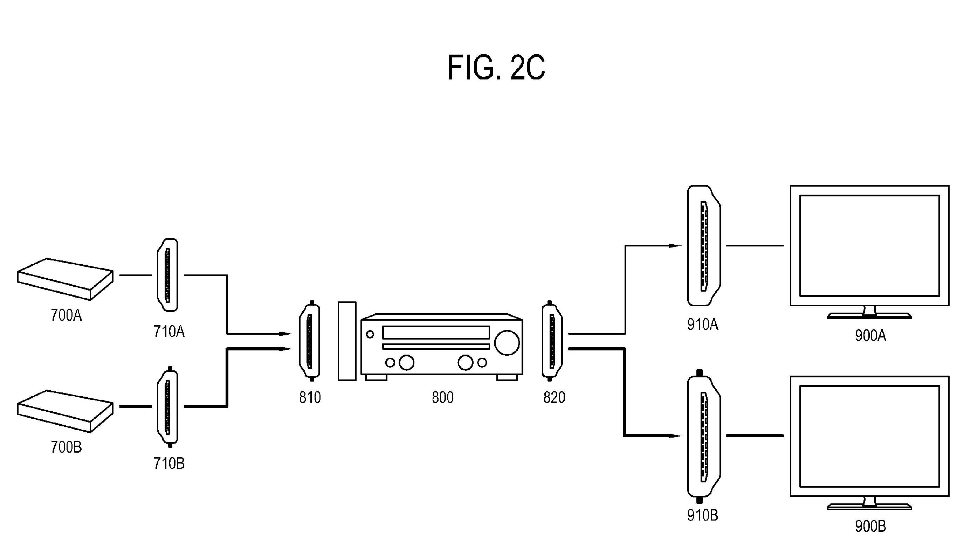

FIG. 2C illustrates an example of a data bypass by an AV device according to an exemplary embodiment.

Referring to FIG. 2C, the AV device includes an AV receiver 800 including a first AV interface 810 and a second AV interface 820. The AV receiver 800 may act as a source/switch device.

The AV receiver 800 may receive a first signal including AV data according to an HDMI standard from an external source device 700A including an HDMI interface 710A through the first AV interface 810 or a second signal including an integrated data packet from an external source device 700B including an AV interface 710B corresponding to the first AV interface 810.

If the AV receiver 800 is connected to an external sink device 900A including an HDMI interface 910A through the second AV interface 820, the AV receiver 800 may bypass the received first signal to the external sink device 900A, and transmit the second signal to the external sink device 900A after converting the second signal into the received first signal.

If the AV receiver 800 is connected, through the second AV interface 820, to an external sink device 900B including an AV interface 910B corresponding to the first AV interface 810, the AV receiver 800 may convert the received first signal into the second signal and transmit the second signal to the external sink device 900B and bypass the received second signal to the external sink device 900B.

Accordingly, the AV device according to the present exemplary embodiment includes the AV interface to transmit the first signal including the AV data according to HDMI standards and the second signal including the integrated data packet, and may transmit and receive any type of signals if the AV device forms the network with the plurality of external devices.

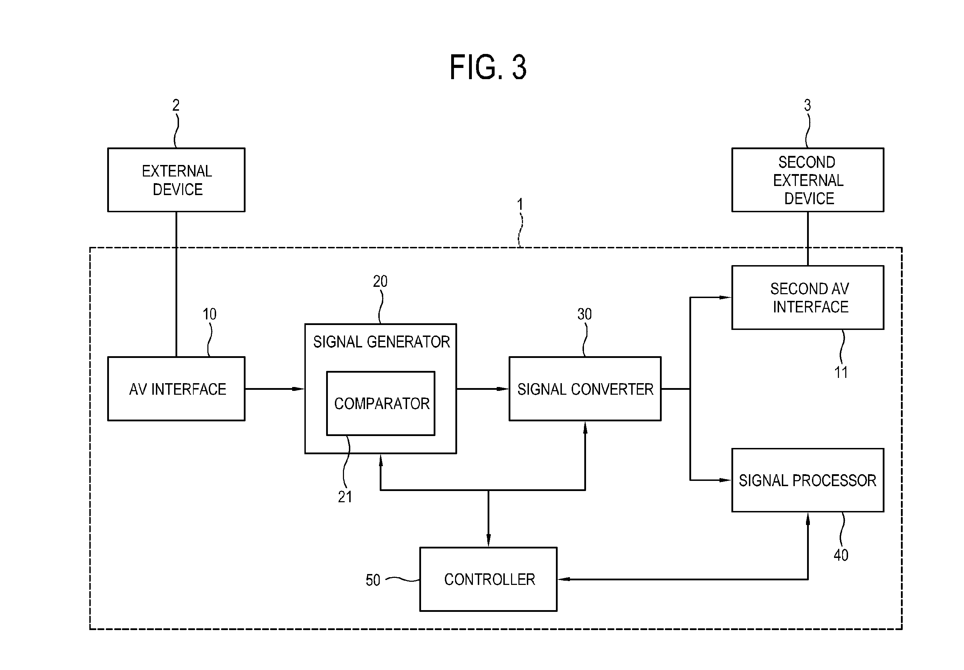

FIG. 3 is a control block diagram of an AV device 1 according to an exemplary embodiment.

Referring to FIG. 3, the AV device 1 includes first and second AV interfaces 10 and 11, a signal generator 20, a signal converter 30, a signal processor 40, and a controller 50 which controls at least one of the foregoing elements.

The first and second AV interfaces 10 and 11 may transmit to/receive from first and second external devices 2 and 3 a first signal including AV data according to an HDMI standard or a second signal including an integrated data packet.

The first and second external devices 2 and 3 may include at least one of a source device to provide the AV data and a sink device to receive and play the AV data.

The first signal may include AV data according to versions 1.0 to 1.4 of the HDMI standards, though another exemplary embodiment is not limited thereto. Thus, the first signal may be transmitted or received when an external source device that includes an HDMI interface according to the versions 1.0 to 1.4 of the HDMI standards is connected to the first or second AV interface 10 or 11.

The second signal includes an integrated data packet. The second signal may be transmitted to or received from an external source device that is connected to the AV interfaces 10 and 11 through a cable including a link bidirectionally transmitting the integrated data packet.

The integrated data packet may include at least one of an uncompressed video data packet, an uncompressed or compressed audio data packet, an Ethernet data packet, a USB data packet, and a control data packet that is transmitted and received to control other devices.

Accordingly, the AV device 1 may further include at least one of a receiver (not shown) to receive the Ethernet data packet from the outside, a USB interface (not shown) to receive the USB data packet, etc.

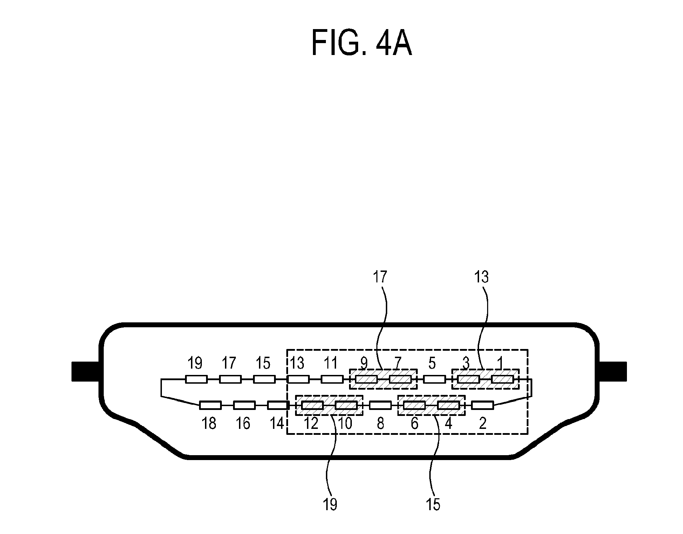

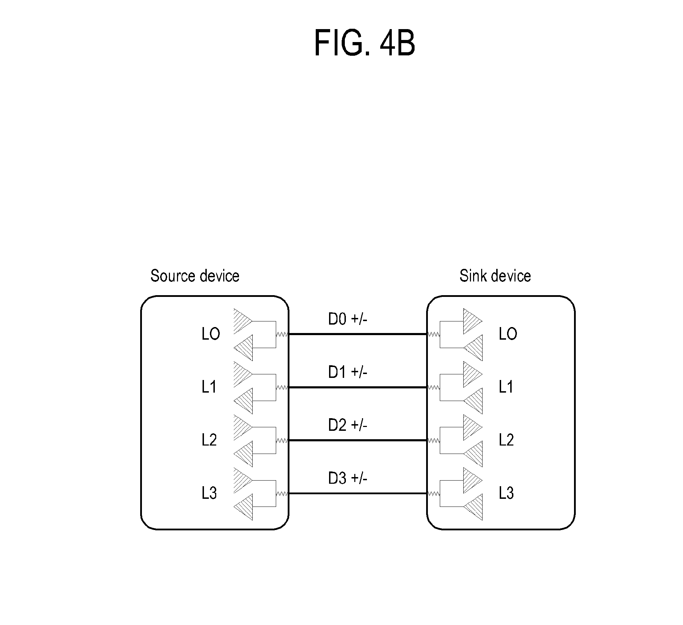

The first and second AV interfaces 10 and 11 will be described in greater detail below with reference to FIGS. 4A and 4B.

If an external device 2 or 3 that transmits the first or second signal through the first or second AV interface 10 or 11 is connected, the signal generator 20 may detect whether a power of a predetermined level is supplied from the external device 2 or 3, and generate a first signal (e.g., a high signal) if the power supply of the predetermined level is detected, and a second signal (e.g., a low signal) if the power supply of the predetermined level is not detected.

For example, if an external source device 2 or 3 that transmits the first or second signal through the first or second AV interface 10 or 11 is connected, the signal generator 20 may detect whether 5V or 0V is supplied from the external source device 2 or 3. If the 5V power supply of the external source device 2 or 3 is detected, the signal generator 20 may generate a high signal. If the 0V power supply is detected from the external source device 2 or 3, the signal generator 20 may generate a low signal.

As the HDMI interface receives 5V through a power pin, 5V may be detected and the signal generator 20 may generate a high signal if the AV device 1 is connected to the external device including the HDMI interface through the first or second AV interface 10 or 11.

The AV interfaces 10 and 11 may be set to receive 0V from the power pin, such that 0V may be detected and the signal generator 20 may generate a low signal if the AV device 1 is connected to the external source device 2 or 3 including the an AV interface corresponding to (i.e., the same as) the AV interfaces 10 and 11.

Accordingly, the high signal or the low signal generated by the signal generator 20 is transmitted to the controller 50 (to be described later). Then, the controller 50 may determine that the first signal is received through the AV interface 10 or 11 if the transmitted signal is a high signal. If the transmitted signal is a low signal, the controller 50 may determine that the second signal is received through the AV interface 10 or 11.

A comparator 21 may determine any change of the generated high signal or low signal and the change time, and may be included in the signal generator 20.

The HDMI interface according to the versions 1.0 to 1.2 may transmit 5V through the power pin.

However, an HDMI according to a version 1.3 may receive power with a higher voltage. In the case of an HDMI interface according to a version 1.4 of the HDMI, power with an HEAC function swing voltage may be received. Furthermore, due to glitch/noise of a cable line, uniform power may not be supplied. In this case, the high signal/low signal that is generated by the signal generator 20 may change in an instant.

To prevent the foregoing, the comparator 21 may determine whether the generated high or low signal is reversely changed. That is, the comparator 21 may determine whether the signal generator 20 repeatedly generates a high signal/low signal due to a supply of nonuniform power.

If it is determined that the high signal generated by the signal generator 20 is changed to the low signal, the comparator 21 determines whether the change of the signal occurs within a predetermined time. If it is determined that the change of the signal occurs within the predetermined time, the comparator 21 may maintain the signal as high and transmit the high signal to the controller 50.

If it is determined that the change of the signal occurs beyond the predetermined time, the comparator 21 may maintain and transmit the low signal to the controller 50.

The signal converter 30 may convert the first signal into the second signal and vice versa according to a control of the controller 50.

The first signal is a signal including the AV data according to an HDMI standard, and the second signal is a signal including the integrated data packet.

The integrated data packet may include at least one of an uncompressed video data packet, an uncompressed or compressed audio data packet, an Ethernet data packet, a USB data packet, a control data packet transmitted and received to control other devices, etc. Accordingly, the signal converter 30 may integrate at least one of the Ethernet data packet, the USB data packet and the control data packet into the first signal and thereby generate a second signal. Otherwise, the signal converter 30 may extract the video data packet and/or audio data packet from the second signal and thereby generate a first signal.

The signal processor 40 may process the first or second signal received through the AV interfaces 10 and 11 to be output to the AV device 1. If a first signal is received through the AV interfaces 10 and 11, the signal processor 40 may process a general video and/or audio signal as the first signal is the AV data according to the HDMI standard.

If a second signal is received through the AV interfaces 10 and 11, the signal processor 40 may extract the video and/or audio data from the integrated data packet and process the extracted video and/or audio signal.

The image processing by the signal processor 40 may include at least one of decoding/encoding, deinterlacing of images corresponding to various image formats, converting a frame fresh rate, scaling, noise-reducing for a better picture quality, detail-enhancing, line scanning, etc. Moreover, the processing may be performed individually or collectively.

The audio processing may include, for example, at least one of converting an analog audio signal into a digital audio signal, amplifying an audio signal, adjusting an output level of an audio signal, adjusting a frequency of an audio signal, etc. The processing may be performed individually or collectively.

The AV device 1 may further include at least one of a display unit (not shown) to display thereon an image corresponding to a video signal processed by the signal processor 40 and a speaker (not shown) to output audio corresponding to an audio signal processed by the signal processor 40.

The controller 50 may determine whether a signal received through the AV interfaces 10 and 11 is the first signal or the second signal, and control the signal converter 30 to bypass the signal or convert the signal into another signal depending on the determination.

The controller 50 may control the signal processor 40 to process the signal according to the determination or the signal converted by the signal converter 30.

The controller 50 may determine whether a signal received through the AV interface 10 is the first signal or the second signal, and bypass the signal according to the determination or transmit the signal converted by the signal converter 30 through the second AV interface 11.

The first signal or the second signal may include information of a target device. Accordingly, the controller 50 may determine whether to output the received signal from the AV device 1 or transmit the received signal based on the information of the target device included in the first or second signal.

The controller 50 may determine whether the AV device 1 may process the first or second signal, and process the received signal or convert into another signal according to the determination.

FIG. 4A illustrates an example of a pin mapping of AV interfaces 10 and 11 of an AV device 1 according to an exemplary embodiment.

The AV interfaces 10 and 11 may share the same form factor with an HDMI interface according to related art HDMI standards to provide compatibility.

One or more pins of the HDMI interface according to the related art HDMI standards may be used as the AV interfaces 10 and 11 according to the present exemplary embodiment.

Referring to FIG. 4A, if the one or more pins of the HDMI interface according to the related art HDMI standards are used, a pin 1 and a pin 3 13 among 19 pins of the HDMI interface may be used as a lane 1 L0 (to be described below with reference to FIG. 4B), a pin 4 and a pin 6 15 may be used as a lane 2 L2, a pin 7 and a pin 9 17 may be used as a lane 3 L3, and a pin 10 and a pin 12 19 may be used as a lane 4 L4 as shown in FIG. 4A. One of two pins connected by the lane is used for a data transmission and the other pin is used for a data reception, and therefore each lane may transmit data bidirectionally.

As shown in FIG. 4A, the AV interface 10 and 11 is provided to transmit and receive AV data through pins 1 to 12, consumer electronics control (CEC) through a pin 13, extended display identification data (EDID) data through pins 15 and 16, power through a pin 18, and a hot plug detect (HPD) signal through a pin 19. As the AV interface 10 and 11 shares the same form factor as each of the pins of the HDMI interface according to the related art HDMI standards, a connector according to the related art HDMI standards may be connected to the AV interface 10 and 11 and transmit and receive HDMI data.

If all of the plurality of pins of the HDMI interface according to the related art HDMI standards are used, the device is connected by a port and a pin that are the same as the HDMI interface according to the related art HDMI standards, but the operation of each pin may differ from the HDMI standards such that the pins may be used for a bidirectional data transmission. For example, at least one of 19 pins of the HDMI interface may be assigned to transmit the integrated data packet to the outside and at least one other pin may be assigned to receive the integrated data packet from the outside, thereby performing the bidirectional data transmission through the HDMI interface according to the related art HDMI standards.

FIG. 4B illustrates a link established on the basis of the AV interface in FIG. 4A. Referring to FIG. 4B, the link is established on the basis of a plurality of lanes. Each lane represents a physical link between devices and may correspond to a twister pair (TP). Some of the plurality of lanes may be used to transmit data while others may be used to receive data.

Since the bidirectional data communication is available in each lane, the integrated data packet according to the present exemplary embodiment may transmit and receive data through the link by using a time division duplex/space division duplex.

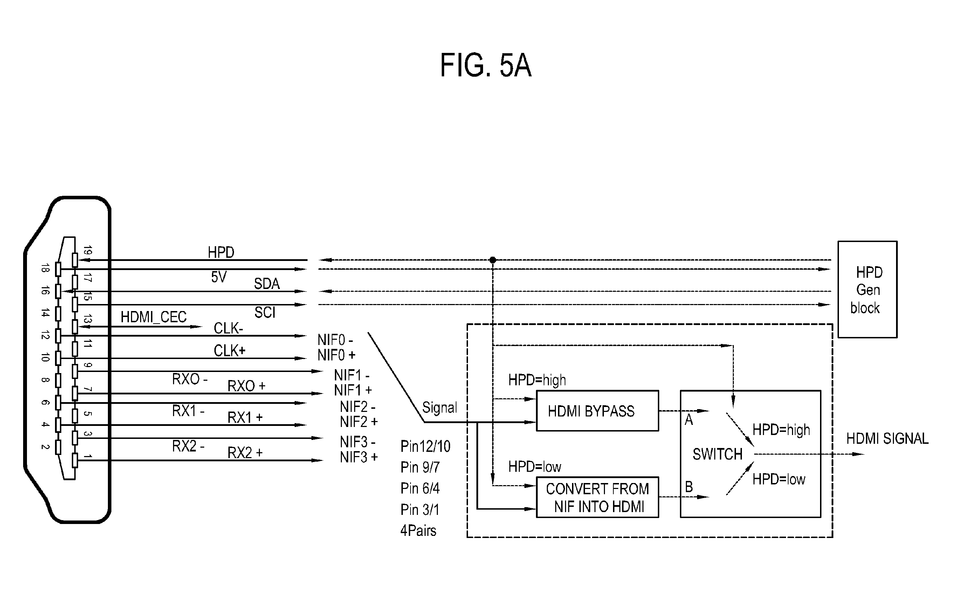

FIGS. 5A to 5C illustrate a signal control by an AV device according to one or more exemplary embodiments.

FIG. 5A illustrates an example of playing or transmitting a first signal including AV data according to HDMI standards by an AV device according to an exemplary embodiment.

Referring to FIG. 5A, if the external source device is connected through an AV interface 10, the signal generator 20 detects whether a pin 18 of the AV interface 10 supplies power of a predetermined level.

For example, if 5V is detected through the pin 18, the signal generator 20 generates a high signal with a hot plug detect signal and transmits the signal to the controller 50.

The controller 50 determines that a first signal is received from the AV interface 10 based on the transmitted high signal. The controller 50 determines a target device of the received first signal, and transmits the first signal to the signal processor 40 to be output from the AV device 1 if it is determined that the AV device 1 is the target device. If it is determined that the AV device 1 is not the target device, the controller 50 transmits the first signal to the outside through a second AV interface 11.

Furthermore, by way of example, if 0V is detected through the pin 18, the signal generator 20 generates a low signal with a hot plug detect signal and transmits the signal to the controller 50.

The controller 50 determines that a second signal including the integrated data packet is received from the AV interface 10 based on the transmitted low signal. The controller 50 controls the signal converter 30 to convert the received second signal into the first signal. The controller 50 further determines the target device of the received signal, and may transmit the first signal converted by the signal converter 30 to the signal processor 40 to be output from the AV device 1 if it is determined that the AV device 1 is the target device. If it is determined that the AV device 1 is not the target device, the controller 50 transmits the first signal to the outside through the second AV interface 11.

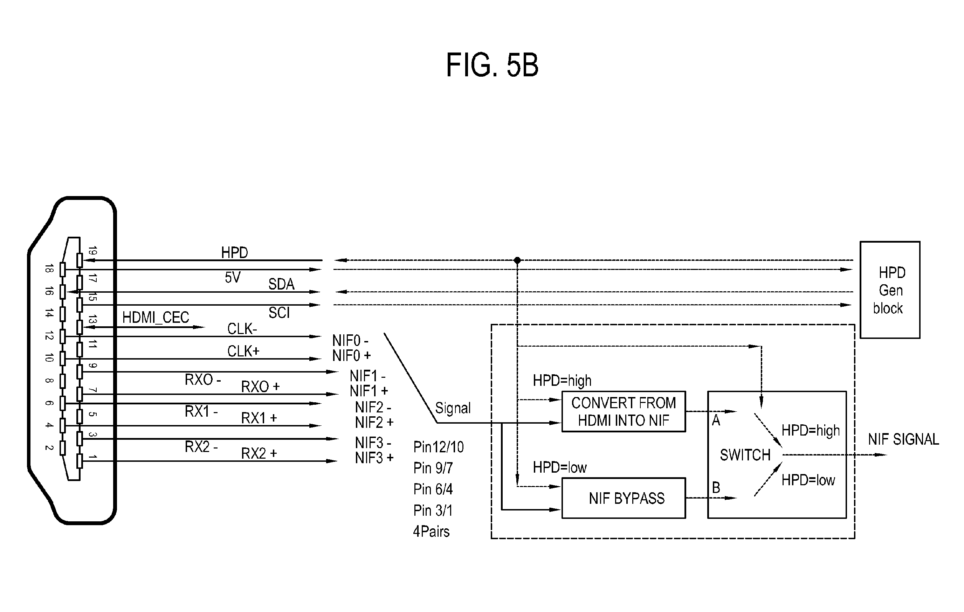

FIG. 5B illustrates an example of playing or transmitting a second signal including an integrated data packet by the AV device according to the exemplary embodiment.

Referring to FIG. 5B, if the external source device is connected through the AV interface 10, the signal generator 20 detects whether the pin 18 of the AV interface 10 supplies power of a predetermined level.

For example, if 5V is detected through the pin 18, the signal generator 20 generates a high signal with a hot plug detect signal and transmits the signal to the controller 50.

The controller 50 determines that the first signal is received from the AV interface 10 based on the transmitted high signal. The controller 50 controls the signal converter 30 to convert the received first signal into a second signal. The controller 50 further determines a target device of the received signal, and transmits the second signal converted by the signal converter 30 to the signal processor 40 to be output from the AV device 1 if it is determined that the AV device 1 is the target device. If it is determined that the AV device 1 is not the target device, the controller 50 transmits the converted second signal to the outside through the second AV interface 11.

Furthermore, by way of example, if 0V is detected through the pin 18, the signal generator 20 generates a low signal with the hot plug detect signal and transmits the signal to the controller 50.

The controller 50 determines that a second signal including the integrated data packet is received from the AV interface 10 based on the transmitted low signal.

The controller 50 determines the target device of the received signal, and may transmit the second signal to the signal processor 40 to be output from the AV device 1 if it is determined that the AV device 1 is the target device. If it is determined that the AV device 1 is not the target device, the controller 50 transmits the second signal to the outside through the second AV interface 11.

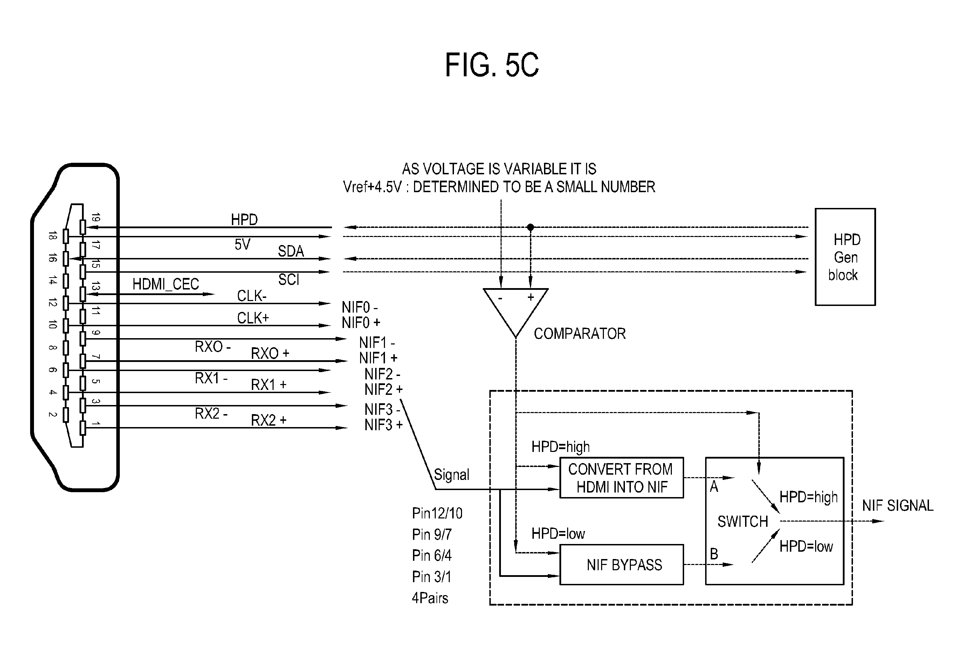

FIG. 5C illustrates another example of playing or transmitting a second signal including the integrated data packet by the AV device according to another exemplary embodiment.

As compared to the AV device illustrated in FIG. 5B, the AV device according to the present exemplary embodiment further includes a comparator 21.

If uniform power is not detected through a pin 18 of an AV interface 10, or if a high voltage is detected according to, for example, the version 1.3 of the HDMI standards or a swing voltage according to the version 1.4 of the HDMI standards is detected or uniform power is not detected due to glitch/noise, the comparator 21 determines whether there is any change of the high signal/low signal generated by the signal generator 20 corresponding to the nonuniform power.

If it is determined that the high signal generated by the signal generator 20 is changed into a low signal, the comparator 21 determines whether the change of the signal occurs within a predetermined time. If it is determined that the change of the signal occurs within the predetermined time, the comparator 21 may maintain the high signal and transmit the signal to the controller 50.

If it is determined that the change of the signal occurs beyond the predetermined time, the comparator 21 may maintain the signal as low and transmit the low signal to the controller 50.

Processes performed after the high signal/low signal is transmitted to the controller 50 are the same as or similar to those described with reference to FIG. 5B.

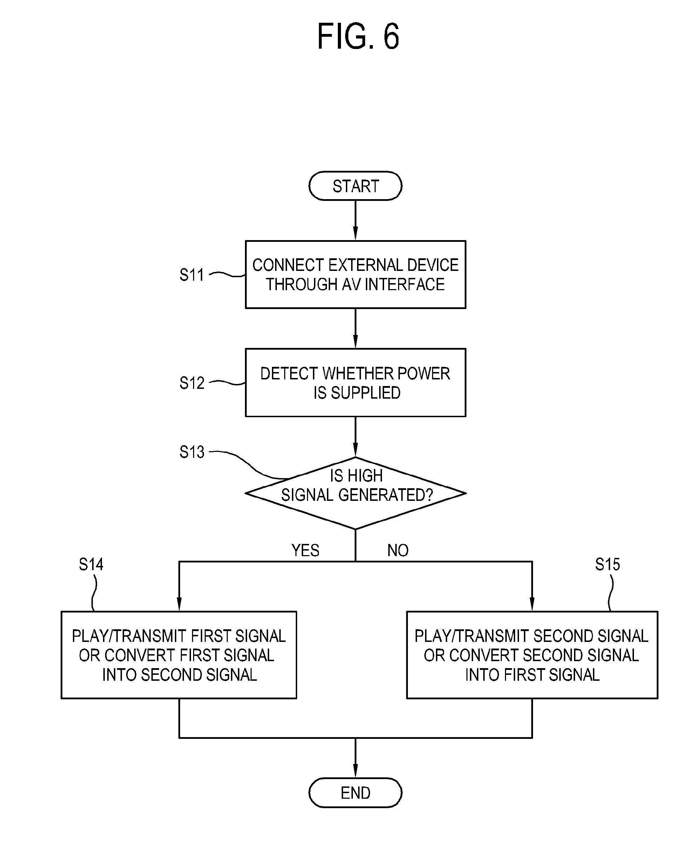

FIG. 6 is a flowchart of a signal control method of an AV device according to an exemplary embodiment.

Referring to FIG. 6, if an external source device is connected through an AV interface 10 or 11 (operation S11), a signal generator 20 detects whether a predetermined level of power is supplied from the external device (operation S12). For example, the signal generator 20 detects power supplied through a pin 18 of the AV interface 10 or 11.

If it is determined that the predetermined level of power is supplied according to the detection, the signal generator 20 generates a high signal and transmits the signal to a controller 50. If it is determined that predetermined level of power is not supplied, the signal generator 20 generates a low signal and transmits the signal to the controller 50.

Upon receiving the high signal (operation S13), the controller 50 determines that a first signal including AV data according to an HDMI standard is received from the external source device, and may at least one of play and transmit the first signal to the outside, or convert the first signal into a second signal including an integrated data packet to play the signal from the AV device or transmit the signal to the outside (operation S14).

Upon receiving the low signal (operation S13), the controller 50 determines that the second signal including the integrated data packet is received from the external source device, and may play or transmit the second signal to the outside, or convert the second signal into a first signal including AV data according to the HDMI standard to play the signal from the AV device or transmit the signal to the outside (operation S15).

As described above, an AV device according to one or more exemplary embodiments receives an integrated data packet as well as a signal according to related art HDMI standards, and outputs or bypasses the received signals or converts the received signals to be output or transmitted to the outside.

While not restricted thereto, an exemplary embodiment can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as computer programs transmitted over a computer-readable transmission medium, such as a carrier wave, and received and implemented in general-use or special-purpose digital computers that execute the programs. Moreover, one or more units of the AV device according to an exemplary embodiment can include a processor or microprocessor executing a computer program stored in a computer-readable medium.

Although a few preferred embodiments have been shown and described, it will be appreciated by those skilled in the art that various changes and modifications might be made without departing from the scope of the invention, as defined in the appended claims.

## Claims

1. An audio/video (AV) device comprising:
a first AV interface which is configured to transmit or receive a first signal comprising AV data according to a High-Definition Multimedia Interface (HDMI) standard and to transmit and receive a second signal comprising an integrated data packet;
a signal converter which selectively converts a received signal received through the AV interface; and
a controller which determines whether the received signal is the first signal or the second signal, and controls the signal converter to bypass the received signal or convert the received signal into a converted signal according to the determination.

2. The AV device according to claim 1, further comprising a signal generator which detects whether power is supplied at a predetermined level from an external device if the external device transmitting the first or the second signal through the first AV interface is connected, and generates a high signal if the power supply of the predetermined level is detected, and a low signal if the power supply of the predetermined level is not detected.

3. The AV device according to claim 2, wherein the controller determines that the received signal received from the connected external device is the first signal if the high signal is received from the signal generator, and determines that the received signal received from the connected external device is the second signal if the low signal is received from the signal generator.

4. The AV device according to claim 3, further comprising:
a signal processor which processes the received signal,
wherein the controller controls the signal processor to process the received signal according to the determination or the converted signal converted by the signal converter.

5. The AV device according to claim 3, further comprising:
a second AV interface,
wherein the controller controls the signal converter to bypass the received signal according to the determination and transmits, through the second AV interface, the converted signal converted by the signal converter or the received signal bypassed through the signal converter.

6. The AV device according to claim 2, further comprising:
a comparator which determines whether the generated high or low signal changes,
wherein the signal generator maintains and transmits the generated high or low signal if it is determined by the comparator that the generated high or low signal changes and the change is within a predetermined time, and does not maintain and transmit the generated high or low signal if it is determined that the generated high or low signal changes and the change is not within the predetermined time.

7. The AV device according to claim 1, wherein the first AV interface is connectable to a cable according to the HDMI standard and a cable comprising a link that is configured to transmit and receive the integrated data packet bidirectionally.

8. The AV device according to claim 7, wherein the integrated data packet is transmitted or received by a time division duplex or a space division duplex through the link.

9. The AV device according to claim 8, wherein the integrated data packet comprises at least one of an uncompressed video data packet, an audio data packet, an Ethernet data packet, a universal serial bus (USB) data packet, and a control data packet that is transmitted and received to control other devices.

10. A signal control method of an audio/video (AV) device, the method comprising:
determining whether a signal received by an AV interface of the AV device from an eternal device is a first signal comprising AV data according to an HDMI standard or a second signal comprising an integrated data packet,
wherein the AV interface is configured to transmit or receive the first signal and to transmit and receive the second signal.

11. The signal control method according to claim 10, further comprising controlling a signal converter of the AV device to bypass the received signal according to the determining or to convert the received signal into a converted signal.

12. The method according to claim 10, further comprising:
detecting whether the external device supplies power at a predetermined level; and
generating, by a signal generator of the AV device, a high signal if the power supply of the predetermined level is detected and generating, by the signal generator, a low signal if the power supply of the predetermined level is not detected.

13. The method according to claim 12, wherein the determining comprises determining that the received signal received from the connected external device is the first signal if the generated signal is the high signal, and determining that the received signal received from the connected external device is the second signal if the generated signal is the low signal.

14. The method according to claim 13, further comprising processing, by a signal processor of the AV device, the received signal according to the determining or the converted signal converted by the signal converter.

15. The method according to claim 13, further comprising bypassing the received signal according to the determining through a second AV interface of the AV device or transmitting the converted signal converted by the signal converter through the second AV interface.
